# EUROPÄISCHE PATENTSCHRIFT

(11) **EP 2 329 182 B1**
(45) Veröffentlichungstag und Bekanntmachung des Hinweises auf die Patenterteilung: **01.01.2014**
(21) Anmeldenummer: 09778217.1
(22) Anmeldetag: 01.09.2009
(51) Int. Cl.: F16M 7/00, F16F 1/36, F01D 25/28

(54) **HORIZONTAL UND VERTIKAL VERSTELLBARES LAGER**
HORIZONTALLY AND VERTICALLY ADJUSTABLE BEARING
SUPPORT RÉGLABLE HORIZONTALEMENT ET VERTICALEMENT

(30) Priorität: 05.09.2008 EP 08015626
(43) Veröffentlichungstag der Anmeldung: 08.06.2011
(73) Patentinhaber: FM Energie GmbH & Co. KG, 64646 Heppenheim (DE)
(72) Erfinder: Mitsch, Franz, 64646 Heppenheim (DE)
(74) Vertreter: Benz, Jürgen
(86) Internationale Anmeldenummer: PCT/EP2009/006288
(87) Internationale Veröffentlichungsnummer: WO 2010/025880

(56) Entgegenhaltungen:
- EP-A1- 0 590 316
- WO-A1-03/036156
- DE-B- 1 154 678
- DE-U1-202005 001 519
- JP-A- 63 114 838
- US-A- 2 057 990
- US-A- 3 455 526
- US-A- 3 578 281
- US-A- 3 815 852

## Beschreibung

Die Erfindung betrifft ein vorzugsweise elastomeres Lager, welches im Maschinenbau, insbesondere für Generatoren von Windkraftanlagen eingesetzt werden kann und auf Grund seiner Bauweise sowohl in vertikaler als auch in horizontaler Richtung jederzeit unter Last positioniert werden kann, so dass die vorhandenen Antriebs-/ Getriebewellen exakt miteinander fluchten.

Durch das neuartige Lager kann ein Generatoroptimal in Bezug auf mit ihm verbundenen Vorrichtungen, wie Getriebe oder Motor unter Last justiert werden, was den exakten Lauf des Generators sicherstellt. Hierdurch kommt es zur Eliminierung oder Reduzierung von am Generator oder System angreifenden oder vom Generator oder System selbst erzeugten unerwünschten Schwingungskräften, und es wird verhindert, dass die eingesetzten Teile vorzeitig verschleißen, bzw. dass Schäden am System, insbesondere an der Gelenkwelle zwischen Generator und Getriebe auftreten.

Das erfindungsgemäße vertikal und horizontal verstellbare Lager ist insbesondere für Generatoren geeignet, und hierbei vorzugsweise für Generatoren in Windkraftanlagen.

Generatoren von Windkraftanlagen müssen exakt zur Getriebeausgangswelle justiert werden. Dies geschieht zum einen bei der Fertigung der Anlage zum anderen nach der Errichtung der Anlage und dem Anbringen des Rotors. Bedingt durch Fertigungstoleranzen und die nach der Rotormontage auf das Windkraftanlagengehäuse wirkenden Kräfte kann nicht davon ausgegangen werden, dass der Generator zum Getriebe so exakt montiert werden kann, dass die Ausgangswelle des Generators exakt mit der Getriebewelle fluchtet. Deshalb müssen Generatoren nach dem Anbringen des Rotors in die richtige Position gebracht werden.

Das geschieht üblicherweise in dem der Generator mit Kran, Hebezeug etc. angehoben wird und in die richtige Position geschoben wird. Zum Anderen gibt es inzwischen Vorrichtungen, welche den gesamten Generatorträger verschiebbar machen. Die erforderliche Ausrichtung erfolgt in der Richtung senkrecht zur Generatorachse horizontal sowie vertikal. Ein Ausrichten axial zur, also in Richtung der Generatorwelle ist in der Regel nicht erforderlich, da der Versatz in der WellenNaben-Verbindung ausgeglichen werden kann.

Aus der US 2,057,990 ist bereits ein Lager zum ausrichten eines Motors oder Antriebs bekannt, wobei das Lager in einer horizontalen Richtung entlang einer Schiene mittels einer Schraubvorrichtung verstellbar ist, und wobei das Lager weiterhin in einer vertikalen Richtung mittels einer mit Schraubgewinde versehener Stütze verstellbar ist. Die Stütze hat kantige Seiten, sodass die Stütze mit einem Schraubschlüssel verstellt werden kann.

Ein ausschließlich höhenverstellbares Generatorlager ist z. B. aus der deutschen Gebrauchsmusteranmeldung DE 20 2005 001 519 bekannt. Hierin wird ein elastomeres Lager beschrieben, bestehend im wesentlichen aus einem konusförmigen Ständer bzw. Lagerfuß, einem konusförmigen Elastomerlager und einer mit gleichem Konuswinkel ausgestatten konusförmigen Glocke, welche in ihrem Kopf mittig entlang der vertikale Achse des Lagers eine runde Gewindebohrung zur Aufnahme der Generatorhalterung besitzt und über das konusförmige Elastomerlager gesteckt ist, sowie eine in axialer Richtung wirkende Verstellvorrichtung aufweist, die es ermöglicht, den an der mittigen Halterung befestigten Generator in seiner Position entlang der zentralen Achse des Lagers durch Anheben oder Absenken zu verstellen.

Die vertikale Verstellung kann hierbei praktischerweise nur vorgenommen werden, wenn der Generator sich nicht auf dem Lager befindet, also ohne Last vor Installation und Einrichtung des Generators. Dies ist ein deutlicher Nachteil, weil üblicherweise nach Aufsetzen des Generators auf die einzelnen Lagerelemente, diese ungleich belastet werden, was wiederum zu eine Dejustierung führen kann. Eine notwendige Nachjustierung ist oft nur unter erschwerten Bedingungen, z. B. durch kurzeitiges Entlasten durch Anheben des Generatorblocks möglich. Überdies kann mittels der im besagten Gebrauchsmuster beschriebenen Lösung keine horizontale Einstellung des Generators vorgenommen werden.

Es bestand somit die Aufgabe, ein Lager zur Verfügung zu stellen, dass sich in vertikaler, wie in horizontaler Lage jederzeit, also auch nach Erstinstallation und Ersteinbau, in beide Richtungen unter Last, d.h. ohne Entfernung oder Anhebung des Generator- oder Maschinenblocks in einfacher Weise und jederzeit justieren und fein einstellen lässt, so dass auch Nachjustierungen problemlos vorgenommen werden können, falls sich die Bedingungen durch den Betrieb verändert haben (beispielsweise durch ungleiche Ermüdung der Lagerelemente, etc.).

Die Aufgabe wurde durch die Bereitstellung des erfindungsgemäßen Lagers, wie folgend beschrieben und in den Ansprüchen charakterisiert, gelöst.

Das erfindungsgemäße Lager ist nicht nur für Generatoren für Windkraftanlagen geeignet, sondern auch generell für schwere Generatoren.und Maschinenteile, die mitanderen sich bewegenden oder Bewegung ausgesetzten Vorrichtungen des Systems bzw. der Anlage in Verbindung stehen.

Gegenstand der Erfindung ist somit ein Maschinen- oder Generatorlager zur vertikalen und horizontalen Justierung desselben umfassend einen Lagerfuß (3), mit dem ein Generator-/Maschinenblock mittels eines Befestigungsschraube (9) verbindbar ist, welche durch eine Bohrung (7) im Fuß (1a) des Getriebe-/Maschinenblocks (1) geführt werden kann und durch ein Gewinde (8) im oder am Lagerfuß (3) fixiert und gespannt wird, wobei zur vertikalen Justierung des Generator-/Maschinenblocks der Lagerfuß (3) eine Verstellschraube (12) aufweist, welche mit einem Gewindeteil (13), das mit dem Lagerfuß (3) in Verbindung steht, vertikal verschraubbar ist, wobei die Verstellschraube (12) eine zentral angeordnete vier- oder mehrkantige Öffnung (11) mit einem Durchmesser, der größer ist als derjenige der Befestigungsschraube (9) zur Aufnahme eines entsprechenden Mehrkantschlüssels (14) aufweist, mit dem von oben durch die Bohrung (7) besagte Vertikalverstellschraube (12) bei zuvor entfernter Befestigungsschraube (9) ein- und ausgeschraubt werden kann, wodurch eine gezielte Absenkung oder Anhebung des Generator-/Maschinenblocks unter Last erfolgt.

Gegenstand der Erfindung ist somit auch ein Maschinen- oder Generatorlager zur vertikalen und horizontalen Justierung desselben umfassend einen Lagerfuß (3), mit dem der Generator-/Maschinenblock mittels eines Befestigungsschraube (9) verbunden ist, welche durch eine Bohrung (7) im Fuß (1a) des Getriebe-/Maschinenblocks (1) geführt werden kann und durch ein Gewinde (8) im oder am Lagerfuß (3) fixiert und gespannt wird, wobei zur horizontalen Justierung der Generator-/Maschineneinheit der Lagerfuß (3) einen beweglichen, mit einer Bohrung (7b) versehenen Schlitten (4) aufweist, der zwischen ihm und dem Fuß (1a) der Generator-/Maschineneinheit (1) angebracht und senkrecht zur Achse der Einheit (1) horizontal verschiebbar ist, wobei die horizontale Verschiebbarkeit des Schlittens (4) und der auf ihn fixierten Einheit (1) durch eine Verschraubungsvorrichtung (19), die am Schlitten angebracht ist, in der Weise erfolgt, dass sie mit einem Gewindeteil (20) verschraubt wird, welches mit dem Lagerfuß (3) in Verbindung steht und den Schlitten hält und führt, so dass dieser gezielt seitlich hin und her bewegt werden kann.

Gegenstand der Erfindung ist insbesondere ein Maschinen- oder Generatorlager umfassend einen Lagerfuß (3), mit dem ein Generator-/Maschinenblock mittels eines Befestigungsschraube (9) verbindbar ist, welche durch eine Bohrung (7) im Fuß (1a) des Getriebe-/Maschinenblocks (1) geführt werden kann und durch ein Gewinde (8) im oder am Lagerfuß (3) fixiert und gespannt wird, und (b) Mittel zur horizontalen und vertikalen Justierung
(i) zur vertikalen Justierung des Generator-/Maschinenblocks der Lagerfuß (3) eine Verstellschraube (12) aufweist, welche mit einem Gewindeteil (13), das mit dem Lagerfuß (3) in Verbindung steht, vertikal verschraubbar ist, wobei die Verstellschraube (12) eine zentral angeordnete vier- oder mehrkantige Öffnung (11) mit einem Durchmesser, der größer ist als derjenige der Befestigungsschraube (9) zur Aufnahme eines entsprechenden Mehrkantschlüssels (14) aufweist, mit dem von oben durch die Bohrung (7) besagte Vertikalverstellschraube (12) bei zuvor entfernter Befestigungsschraube (9) ein- und ausgeschraubt werden kann, wodurch eine gezielte Absenkung oder Anhebung des Generator-/Maschinenblocks unter Last erfolgt, und
(ii) zur horizontalen Justierung des Generator-/Maschinenblocks der Lagerfuß (3) einen beweglichen, mit einer Bohrung (7b) versehenen Schlitten (4) aufweist, der zwischen ihm und dem Fuß (1a) des Generator-/Maschinenblocks (1) angebracht werden kann und senkrecht zur Achse der Einheit (1) horizontal verschiebbar ist, wobei die horizontale Verschiebbarkeit des Schlittens (4) und der auf ihn fixierten Einheit (1) durch eine Verschraubungsvorrichtung (19), die am Schlitten angebracht ist, in der Weise erfolgt, dass sie mit einem Gewindeteil (20) verschraubt wird, welches mit dem Lagerfuß (3) in Verbindung steht und den Schlitten hält und führt, so dass dieser gezielt seitlich hin und her bewegt werden kann.

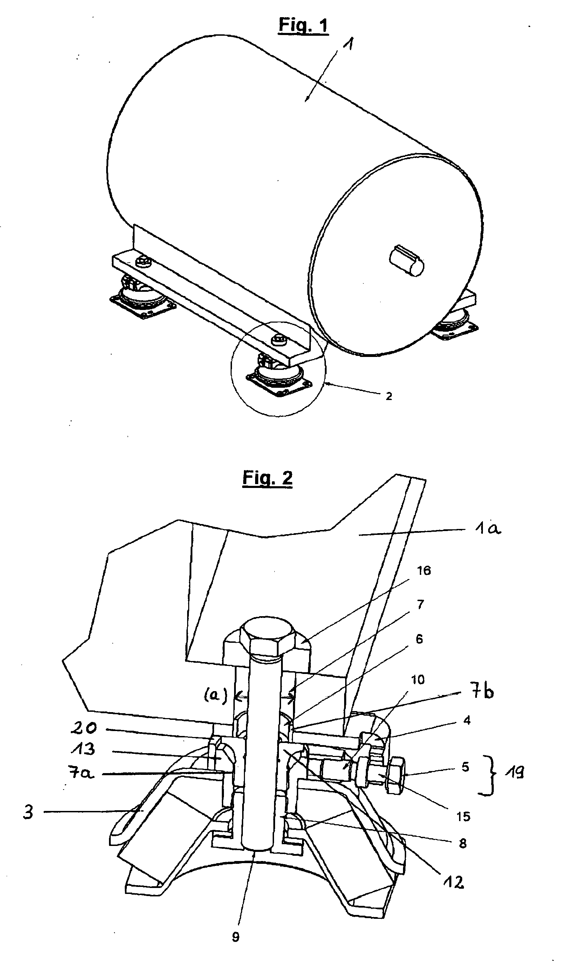

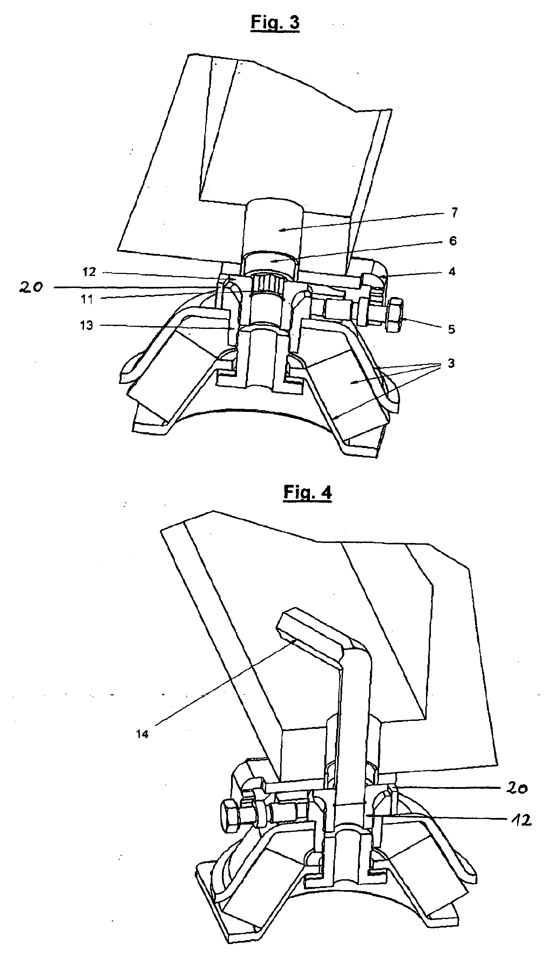

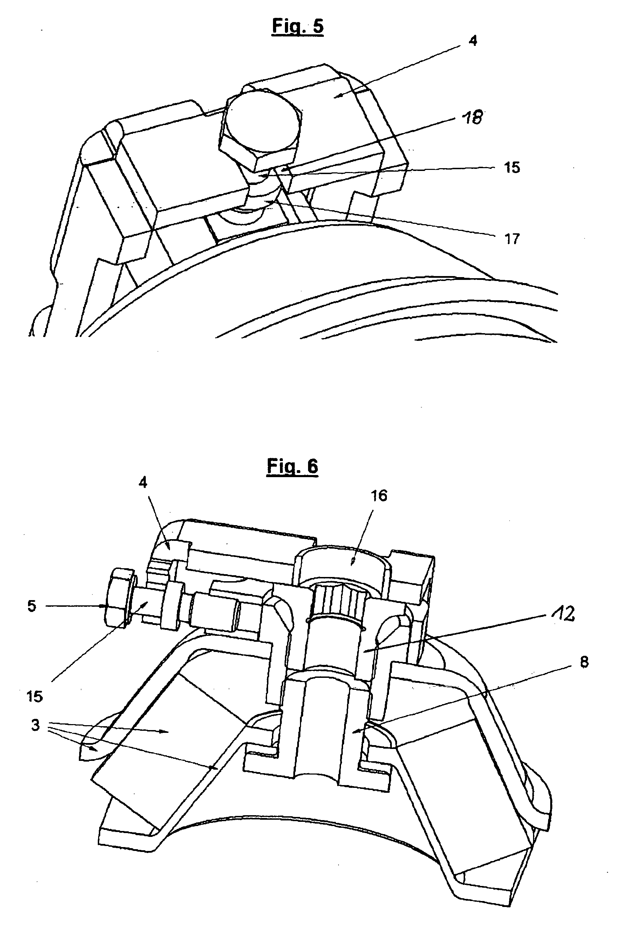

Ein solches Lager ist in den Abbildungen 1 - 6 exemplifiziert.

Erfindungsgemäß ist das Gewinde (8) entweder ein Gewinde welches am oder im Lagerfuß eingeschnitten worden ist, oder es stellt eine Befestigungsmutter dar, die am oder im Lagerfuß angeordnet ist.

Vorzugsweise weist das erfindungsgemäße Lager einen Lagerfuß (3) auf, welcher eine zentrale Bohrung (7a) besitzt, in welche die verschiedenartigen Bauelemente eingeschraubt oder eingesteckt werden können. Demnach kann diese Bohrung (7a) innen glatt sein oder ein Gewinde zur Aufnahme von Muttern (z. B. 8, 13) oder Schrauben (z.B. 9) oder Bolzen und Hülsen aufweisen. Die Bohrung kann auch verschieden Innendurchmesser besitzen zur Aufnahme verschieden großer Schrauben, Muttern, Hülsen oder Bolzen.

Der Lagerfuß (3), kann aber auch verschiedenartige Aufsätze besitzen, an dem die erfindungsgemäßen Elemente befestigt werden können.

Gegenstand der Erfindung ist somit ein Lager, welches einen Lagerfuß (3) mit einer zentralen Bohrung (7a) besitzt. In einer bevorzugten Ausführungsform ist die Innenfläche der Bohrung (7a) glatt, d.h. sie besitzt kein Gewinde.

Die folgende Beschreibung bezieht sich auf Lager, die mit einem Lagerfuß (3) mit einer zentral angeordneten Bohrung (7a) versehen sind.

Zur Aufnahme der Vertikalschraube (12) besitzt das erfindungsgemäße Lager eine Stützmutter (13), welche entweder in den oberen Teil der zentralen Bohrung (7a) eingesteckt wurde, oder mittels eines Außengewindes in den hierfür vorgesehenen Gewindeteil der Bohrung (7a) eingeschraubt wurde.

Die Vertikalschraube (12) kann aber auch ohne Verwendung einer Stützmutter (13) in ein eingeschnittenes Gewinde der Bohrung (7a) ein- und ausgeschraubt werden. Vorzugsweise besitzt das erfindungsgemäße Lager eine Vertikalverstellschraube (12) die in eine Stützmutter (13) geschraubt wird, wobei die Stützmutter in die glatte Zentralbohrung des Lagerfußes eingesteckt wird.

Die Vertikalschraube (12) mit der der Vertikalabsenkung und -anhebung des Generator-/Maschinenblocks erfolgt, besitzt erfindungsgemäß eine senkrecht nach oben zum Generator-/Maschinenblock weisende, zentrale mehrkantige, mindestens vierkantige Öffnung (11) zur Aufnahme eines entsprechend ausgebildeten Mehrkantoder Innenkantschlüssels (14). Vorzugsweise ist die Öffnung (11) und damit auch der entsprechende Schlüssel (14) als Vier-, Fünf-, insbesondere aber Sechskant ausgeführt. Die Öffnung (11) der Vertikalschraube (12) ist notwendigerweise durchgehend, da durch diese Öffnung auch die Befestigungsschraube (9) hindurch gesteckt wird, um mit dem Lagerfuß vorzugsweise über die Befestigungsmutter (8) verspannt werden zu können. Somit sollte der Durchmesser der Befestigungsschraube (9) etwas kleiner sein als der Durchmesser der Öffnung (11) in der Vertikalschraube (12).

Der passende Mehrkantschlüssel, vorzugsweise Innensechskantschlüssel (14) wird erfindungsgemäß von oben durch die Bohrung (7) im Fuß (1a) des auf den Lagerfuß aufliegenden Generator- /Maschinenblocks (1) geführt, in die Öffnung (11) der Vertikalschraube (12) gesteckt und entsprechend gedreht. Somit kann eine Höhenverstellung erfolgen, ohne dass Lager und Generator / Maschine voneinander getrennt werden müssen. Je nach Gewindeweg der Vertikalverstellschraube (12) können so verschieden große vertikale Verschiebungswege erzielt werden. In der Praxis haben sich vertikale Verschiebungswege von ± 5mm bis ± 10 mm als ausreichend erwiesen; es können aber auch größere oder kleinere Wege erfindungsgemäß erzielt werden.

Zur horizontalen Justierung der Generator-/Maschineneinheit weist der Lagerfuß (3) einen beweglichen, mit einer Bohrung versehenen Schlitten (4) auf, der zwischen ihm und dem Fuß (1a) der Generator-/Maschineneinheit (1) angebracht und erfindungsgemäß senkrecht zur Achse der Einheit (1) horizontal verschiebbar ist. Der bewegliche Schlitten (4) besitzt eine Verschraubungsvorrichtung (19), welche in der einfachsten Ausführung eine Schraube (5) ist, durch deren Ein- Ausschrauben in oder einem Gewindeteil (20), welches direkt oder indirekt mit dem Lagerfuß in Verbindung steht, die horizontale Beweglichkeit, bzw. Verschiebbarkeit des Schlittens ermöglicht wird. Die Verschraubungsvorrichtung (19) bzw. das Gewindeteil (20) sind senkrecht zur Achse des Generators angeordnet, so dass eine senkrecht zur Achse ausgerichtete seitliche Verschiebung des Schlittens erfolgen kann.

Das Gewindeteil (20) ist entweder ein Teil des Lagerfußes (3), oder es ist, wie in den Abbildungen dargelegt, ein eigenes Bauteil, welches beispielsweise eine Bohrung oder Öffnung besitzt und auf einen entsprechend geformten vorhandenen Rand oder Kragen, vorzugsweise um die zentrale Bohrung (7a) des Lagerfußes herum aufgelegt und mit diesem fest fixiert werden kann. Bei dieser Art von Fixierung bewegt sich das Gewindeteil (20), welches.mit dem Verschraubungselement (19) des Schlittens (4) in Verbindung steht, bei vertikaler Verschiebung des Generator- / Maschinenblocks durch die Vertikalverstellschraube (12) nicht vertikal mit dem Schlitten (4) mit. Damit eine Vertikaljustierung, wie beschrieben, trotzdem möglich werden kann, darf das Verschraubungselement (19) (im einfachsten Fall die Spindelschraube (5)) am Schlitten nicht in einer runden Bohrung im Schlitten geführt werden, sondern in einem Schlitz (18).

Das Gewinde-Bauteil (20) kann aber auch fest mit der Vertikalverstellschraube (12) verbunden sein, die, wie oben dargelegt, ein Bestanteil des Lagerfußes (3) ist. In diesem Fall bleibt der Abstand zwischen dem Teil (20) und dem Schlitten (4) bei vertikaler Verstellung durch die Schraube (12) stets gleich. Die Verschraubungseinheit (19) kann somit durch eine Bohrung mit definiertem Durchmesser im Schlitten (4) (z. B. im Durchmesser der Schraubenspindel (5)) geführt werden, und Schlitz (18) erübrigt sich.

Die Konstruktion des Schlittens ist so konzipiert, dass er frei beweglich, vorzugsweise ohne direkt auf dem Lagerfuß aufzuliegen, über die zentrale Bohrung (7a) des Lagerfußes, bzw. die Vertikalverstellschraube (12) hinweg gleiten kann. Der Schlitten (4) besitzt ferner eine Bohrung (7b), die im Durchmesser der Bohrung (7) des auf ihn aufliegenden Generatorfußes (1a) entspricht. Der Generatorfuß ist auf dem Schlitten (4) so platziert, dass beide besagten Bohrungen deckungsgleich übereinander liegen.

Die horizontale Verschiebung des Schlittens (4) und damit des Generator- / Maschinenblocks erfolgt vorzugsweise ohne oder bei eingelegter aber nicht fest angezogener Befestigungsschraube (9), die durch die Bohrungen (7, 7b) geführt ist. Die seitliche Verschiebung kann somit bis zum (theoretischen) Anschlag des Schlittens an die Schraube (9) erfolgen. Der Verschiebungsweg (a) ergibt sich somit aus der Differenz der Durchmesser der Bohrungen (7, 7b) und der Schraube (9). Durch entsprechende Wahl der Durchmesser kann somit ein mehr oder weniger großer horizontaler Verschiebungsweg erreicht werden. Üblicherweise überschreitet der maximale Verschiebungsweg (a) bei herkömmlichen.Anlagen nicht mehr als 20 mm. Geht man von einer Mittelstellung aus, bei der die Schraube (9) einen gleichen Abstand zur Innenwand der Bohrung (7) aufweist, so bewegt sich die horizontale Justierungsmöglichkeit innerhalb eines Bereiches von ± 10 mm, vorzugsweise **±** 5 mm. Jedoch können durch entsprechende konstruktive Maßnahmen auch größere Verschiebungswege (a), wie zum Beispiel ± 15 oder ± 20 mm ermöglicht werden.

Damit sich der schwere Generatorblock auf dem Schlitten (4) nicht verrutscht, wenn der Schlitten durch Betätigung der Verschraubungsvorrichtung (19) horizontal hin und her bewegt wird, besitzt der Lagerfuß (3) oder aber auch der Fuß (1a) eine Fixierungsmöglichkeit. Dies kann zum Beispiel durch eine Querverschiebehülse (6) erreicht werden. Diese Querverschiebehülse ist vorzugsweise ein Metallring der entweder passgenau in die Bohrung (7b) des Schlittens (4) eingesetzt wird und über dessen Rand hinaus ragt, so dass er dadurch in die Bohrung (7) des Fußes (1a) der Generator- / Maschinenblocks passgenau hinein reicht und diesen somit fixiert und festhält. Umgekehrt erhält man das gleiche Ergebnis, wenn man besagte Querverschiebehülse (6) in die Bohrung (7) des Fußes (1a) einlegt und sie in die Bohrung (7b) des Schlittens hinein ragen lässt.

Auf eine Querverschiebehülse kann auch verzichtet.werden, wenn entweder die Bohrung (7) des Fußes (1a) oder die Bohrung (7b) des Schlittens (4) an der entsprechenden Seite einen Kragen besitzt, der in das andere besagte Bauteil hinein ragt, wodurch ebenfalls eine horizontale Fixierung der beiden Bauteile erreicht wird.

Bei Generatorlagern werden vorwiegend Elastomere eingesetzt. Elastomerlager sind per se hinreichend bekannt. Auch die beschriebenen erfindungsgemäßen Lager sind vorzugsweise Elastomerlager. Die für diese Generatorlager verwendeten Elastomere sind im Stand der Technik bekannt und in der einschlägigen Literatur hinreichend beschrieben. Vorzugsweise werden handelsübliche Naturkautschuke oder Kunststoffe eingesetzt. Beispiele für geeignete Elastomere sind: Naturkautschuk, Isopren-, Butadien-, Polynorbonen-, Chloropren-, Styrolbutadien-, Butyl-, Äthylenpropylen-, Nitril-, Polyurethan-, Acrylat-, Äthylenacrylat, Silicon- oder FluorKautschuke bzw. Kunststoffe. Die für diese Erfindung verwendeten Elastomermaterialien bestehen vorzugsweise im wesentlichen aus einem Naturkautschuk, einem Naturkautschukderivat oder aus einem geeigneten elastischen polymeren Kunststoff oder Kunststoffgemisch. Die Elastomerschicht kann erfindungsgemäß unterschiedliche Härte ("Shore-Härte") und unterschiedliche Dämpfungseigenschaften aufweisen, entsprechend den gewünschten Anforderungen. Vorzugsweise werden Elastomere mit einer Härte von 20 bis 100 Shore, insbesondere 40 bis 80 Shore verwendet. Die Herstellung von Elastomeren unterschiedlicher Härte ist im Stand der Technik hinreichend beschrieben.

### Genauere Beschreibung der vertikalen Verstellung:

Die Höhennivellierung des Generators muss vorzugsweise unter Last erfolgen, d.h. das gesamte Generatorgewicht muss justiert werden. Für den Fall, dass man erst den Generator anheben muss, ist eine Justierung nur schwer möglich, da die elastischen Generatorlager sich durch das Generatorgewicht nochmals vertikal verschieben, so dass ein erneutes Justieren erforderlich ist.

Bei dem neu entwickelten Lager ist dies nicht der Fall. Die vertikale Justierung erfolgt über einen Mehrkantschlüssel (14), vorzugsweise durch einen Innensechskantschlüssel, welcher von oben durch die Generatorbohrung (7) in einen Sechskant (11), der sich in der Justierschraube (12) befindet. Durch Drehen dieser vertikal verstellbaren Justierschraube (12), welche vorzugsweise in der Stützmutter (13) eingeschraubt wird, kann der Generator in vertikaler Richtung unter Beibehaltung seines Gewichtes justiert werden. Während der vertikalen Verstellung und Justierung sind die Befestigungsschrauben (9) nicht eingeschraubt, so dass der entsprechende Freiraum für den Innensechskant zur Vertikalverstellung (11) bleibt.

### Genauere Beschreibung der horizontalen Verstellung

Der zur horizontalen Verschiebung erforderliche Horizontal-Verschiebeschlitten (4) ist vorzugsweise über eine Querverschiebehülse (6) mit dem Generatorfuß (1 a) radial fixiert. Die Bohrung (7) im Generatorfuß bietet einen für diese Hülse ausreichenden Durchmesser. Somit kann über die Verschraubungseinheit (19, 5, 10 15, 17) der Generator in horizontaler Richtung senkrecht zur Generatorachse verschoben werden. Dabei erfolgt der Verschiebekraftfluss über die Horizontalspindel (5), welche sich in den Gewindestützring (10) den Anforderungen entsprechend mehr oder weniger tief einschraubt und damit den Abstand zwischen (10) und (4) verändert. Die Horizontalspindel (5) stützt sich über einen doppelten Bund an (4) ab. Der Schlitten (4) hat dazu einen Schlitz mit der Breite, die etwas größer ist als der schlanke Spindeldurchmesser (15) zwischen den beiden Anschlagbunden der Horizontalspindel (5). Während der horizontalen Verstellung und Justierung können die Befestigungsschrauben (9) bereits angebracht sein, sollten aber nicht fest verspannt werden, so dass eine Verschiebung des Schlittens (4) leichtgängig erfolgen kann. Für den Fall, dass die Verschraubung des Schlittens mit dem Lagerfuß (3) über ein mit ihm fest verbundenes Teil geschieht, muss der dünnere Teil der Querverstellschraube (5) im Verschiebeschlitten (4) durch einen entsprechenden Schlitz (18) geführt werden, damit eine Vertikalverstellung möglich ist.

Vorzugsweise erfolgt zunächst die vertikale Ausrichtung und Justierung und anschließend die horizontale.

Nach endgültiger Ausrichtung in vertikaler und horizontaler Richtung werden die Schrauben (9) verspannt und der Generator dadurch befestigt. Zur Überbrückung des im Generatorfuß (1a) für die Schraube jetzt zu großen Durchmessers wird vorzugsweise eine Unterlagscheibe (16) verwendet.

Der wesentliche Vorteil des erfindungsgemäßen Lagers ist, dass durch eine direkt am Generator- / Maschienenlager angebrachte Mechanik der Generator / die Maschine sowohl in horizontaler als auch in vertikaler Richtung unter Last leicht verschoben werden kann. Es sind keine zusätzlichen Hilfsmittel außer Standardwerkzeugen erforderlich, um den Generator bzw. die Maschine in die exakte Position zu bringen.

### Beschreibung der Bezugsgrößen in den Abbildungen, im Text und in den Ansprüchen

- 1: Generator
- 1a: Generatorfuß
- 2: erfindungsgemäßes Generator Elastomerlager mit Quer- und Höheneinstellung
- 3: Lagerfuß
- 4: Horizontaler Verschiebeschlitten
- 5: Querverstellschraube (Horizontalspindel)
- 6: Querverschiebehülse
- 7: Bohrung im Generatorfuß 1a
- 7a: Bohrung im Lagerfuß
- 7b: Bohrung im Verschiebeschlitten (4)

- 8: Befestigungsmutter für Befestigungsschraube (9)
- 9: Befestigungschraube (9)
- 10: Stützring (Teil der Verschraubungseinheit (19))
- 11: Mehrkant-Öffnung in Vertikalverstellschraube (12)
- 12: Verktikalverstellschraube
- 13: Stützmutter in Bohrung (7a) des Lagerfußes
- 14: Mehrkant- (Sechskant-) Schlüssel zur Vertikalverstellung
- 15, 17: Teile Verschraubungseinheit (19)
- 16: Unterlagscheibe für Befestigungsschraube (9)
- 18: Schlitz im Schlitten (4)
- 19: Verschraubungseinheit (Teil des Schlittens (4))
- 20: Gewindeteil zur Fixierung des Verschiebeschlittens (4)
- (a): maximaler Verschiebungsweg des Schlittens (4)

### Beschreibung der Abbildungen:

Abb. 1: Generator mit erfindungsgemäßen Lagern
Abb. 2 - 6: erfindungsgemäßes Lager in verschiedenen Schnitten und aus unterschiedlichen Perspektiven.

## Patentansprüche

1. Maschinen- oder Generatorlager umfassend
(a) einen Lagerfuß (3), mit dem ein Generator-/Maschinenblock mittels eines Befestigungsschraube (9) verbindbar ist, welche durch eine Bohrung (7) im Fuß (1a) des Getriebe-/Maschinenblocks (1) geführt werden kann und durch ein Gewinde (8) im oder am Lagerfußes (3) fixiert und gespannt wird, und
(b) Mittel zur horizontalen und vertikalen Justierung,
**dadurch gekennzeichnet dass**,
(i) zur vertikalen Justierung des Generator-/Maschinenblocks der Lagerfuß (3) eine Verstellschraube (12) aufweist, welche mit einem Gewindeteil (13), das mit dem Lagerfuß (3) in Verbindung steht, vertikal verschraubbar ist, wobei die Verstellschraube (12) eine zentral angeordnete vier- oder mehrkantige Öffnung (11) mit einem Durchmesser, der größer ist als derjenige der Befestigungsschraube (9) zur Aufnahme eines entsprechenden Mehrkantschlüssels (14) aufweist, mit dem von oben durch die Bohrung (7) besagte Vertikalverstellschraube (12) bei zuvor entfernter Befestigungsschraube (9) ein- und ausgeschraubt werden kann, wodurch eine gezielte Absenkung oder Anhebung des Generator-/Maschinenblocks unter Last erfolgt, und
(ii) zur horizontalen Justierung des Generator-/Maschinenblocks der Lagerfuß (3) einen beweglichen, mit einer Bohrung (7b) versehenen Schlitten (4) aufweist, der zwischen ihm und dem Fuß (1a) des Generator-/ Maschinenblocks (1) angebracht werden kann und senkrecht zur Achse der Einheit (1) horizontal verschiebbar ist, wobei die horizontale Verschiebbarkeit des Schlittens (4) und der auf ihn fixierten Einheit (1) durch eine Verschraubungsvorrichtung (19), die am Schlitten angebracht ist, in der Weise erfolgt, dass sie mit einem Gewindeteil (20) verschraubt wird, welches mit dem Lagerfuß (3) in Verbindung steht und den Schlitten hält und führt, so dass dieser gezielt mittels besagter Verschraubungsvorrichtung (19) seitlich hin und her bewegt werden kann,
wobei der Durchmesser der Bohrung (7) größer ist als der Durchmesser der Befestigungsschraube (9), und die Differenz dieser Durchmesser den maximalen horizontalen Verschiebungsweg (a) darstellt, um den der bewegliche Schlitten (4) und damit der Generator/Maschinenblock (1) in eine Richtung seitlich verschoben werden kann.

2. Lager nach Anspruch 1, **dadurch gekennzeichnet, dass** das Gewindeteil (13) eine Stützmutter ist, welche am oder in einer zentral angeordneten Bohrung (7a) im Lagerfuß angebracht ist.

3. Lager nach Anspruch 1, **dadurch gekennzeichnet, dass** das Gewindeteil (13) einem Gewinde entspricht, welches am oder in einer zentral angeordneten Bohrung (7a) des Lagerfußes eingeschnitten worden ist.

4. Lager nach einem der Ansprüche 1 - 3, **dadurch gekennzeichnet, dass** das Gewinde (8) mit dessen Hilfe die Befestigungsschraube (9) gespannt wird, eine Befestigungsmutter ist, welche am oder in einer zentral angeordneten Bohrung des Lagerfußes angebracht ist.

5. Lager nach Anspruch 1, **dadurch gekennzeichnet, dass** der Lagerfuß (3) eine zentrale Bohrung (7a) aufweist.

6. Lager nach einem der Ansprüche 1 - 5, **dadurch gekennzeichnet, dass** die Vertikalverstellschraube (12) eine sechskantige Öffnung aufweist zur Aufnahme eines entsprechenden Mehrkantschlüssels (14).

7. Lager nach einem der Ansprüche 1 - 6, **dadurch gekennzeichnet, dass** der Durchmesser der Bohrung (7b) des Schlittens (4) dem Durchmesser der Bohrung (7) des Fußes (1a) des Generator- / Maschinenblocks (1) entspricht, und der Generator-/Maschinenblock so auf dem Schlitten (4) platziert ist, dass die Bohrungen (7, 7b) deckungsgleich übereinander liegen.

8. Lager nach einem der Ansprüche 1 - 7, **dadurch gekennzeichnet, dass** der maximale Verschiebungsweg (a) 10 - 20 mm beträgt.

9. Lager nach einem der Ansprüche 1 - 8, **dadurch gekennzeichnet, dass** er eine Querverschiebehülse (6) aufweist, die passgenau in die Bohrung (7b) des Schlittens (4) eingesetzt wird und über die obere Schlittenfläche hinausragt und so exakt in die darüber liegende Bohrung (7) des Fußes (1a) des Generator- / Maschinenblocks (1) passt und letztere dadurch fixieren kann.

10. Lager nach einem der Ansprüche 1 - 8, **dadurch gekennzeichnet, dass** er eine Querverschiebehülse (6) aufweist, die passgenau in die Bohrung (7) des Fußes (1a) des Generator-/ Maschinenblocks eingesetz werden kann und über die untere Fläche des Fußes hinausragt und so exakt in die darunter liegende Bohrung (7b) des Schlittens (4) passt und den Generator- / Maschinenblock dadurch fixieren kann.

11. Lager nach einem der Ansprüche 1 - 10, **dadurch gekennzeichnet, dass** die Verschraubungsvorrichtung (19) einee Spindelschraube (5, 15) ist, die in einem Gewindestützring (10) endet, welcher in das Gewindeteil (20) zur horizontalen Justierung ein- und ausgeschraubt wird.

12. Lager nach einem der Ansprüche 1 - 11, **dadurch gekennzeichnet, dass** das Gewindeteil (20) ein integraler Bestandteil des Lagerfußes (3) ist.

13. Lager nach einem der Ansprüche 1 - 11, **dadurch gekennzeichnet, dass** das Gewindeteil (20) ein vom Lagerfuß (3) getrenntes Bauteil ist.

14. Lager nach Anspruch 13, **dadurch gekennzeichnet, dass** das Gewindeteil (20) mit der Vertikalverstellschraube (12) verbunden ist und sich mit dieser vertikal verstellt.

15. Lager nach einem der Ansprüche 1 - 14, **dadurch gekennzeichnet, dass** es ein Elastonierlager ist.

16. Verwendung eines Lagers gemäß der Ansprüche 1 - 15 für Generatoren in Windkraftanlagen.

## Claims

1. Machine or generator bearing comprising
(a) a bearing foot (3), to which a generator/machine block can be connected by means of an attachment screw (9), which can be passed through a hole (7) in the foot (1a) of the gearbox/machine block (1) and is fixed and tensioned by a thread (8) in or on the bearing foot (3), and
(b) means for horizontal and vertical adjustment,
**characterised in that**
(i) for vertical adjustment of the generator/machine block, the bearing foot (3) has an adjustment screw (12), which can be screwed vertically up or down by means of a threaded part (13) which is connected to the bearing foot (3), where the adjustment screw (12) has a centrally arranged square or polygonal opening (11) having a diameter which is greater than that of the attachment screw (9) for the accommodation of a corresponding Allen key (14), by means of which said vertical adjustment screw (12) can be screwed in and out from above through the hole (7) with the attachment screw (9) removed in advance, causing specific lowering or raising of the generator/machine block under load, and
(ii) for horizontal adjustment of the generator/machine block, the bearing foot (3) has a movable slide (4), which is provided with a hole (7b) and which can be attached between the bearing foot (3) and the foot (1a) of the generator/machine block (1) and can be moved horizontally perpendicular to the axis of the unit (1), where the horizontal movability of the slide (4) and the unit (1) fixed to it takes place through a screw connection device (19) which is attached to the slide in such a way that it is screwed up or down by means of a threaded part (20), which is connected to the bearing foot (3) and holds and guides the slide so that it can be moved laterally to and fro in a specific manner by means of said screw connection device (19),
where the diameter of the hole (7) is greater than the diameter of the attachment screw (9), and the difference of these diameters represents the maximum horizontal movement distance (a) by which the movable slide (4) and thus the generator/machine block (1) can be moved laterally in one direction.

2. Bearing according to Claim 1, **characterised in that** the threaded part (13) is a supporting nut, which is attached to or in a centrally arranged hole (7a) in the bearing foot.

3. Bearing according to Claim 1, **characterised in that** the threaded part (13) corresponds to a thread which has been cut on or in a centrally arranged hole (7a) of the bearing foot.

4. Bearing according to one of Claims 1 - 3, **characterised in that** the thread (8) with the aid of which the attachment screw (9) is tensioned is an attachment nut which is attached to or in a centrally arranged hole of the bearing foot.

5. Bearing according to Claim 1, **characterised in that** the bearing foot (3) has a central hole (7a).

6. Bearing according to one of Claims 1 - 5, **characterised in that** the vertical adjustment screw (12) has a hexagonal opening for the accommodation of a corresponding Allen key (14).

7. Bearing according to one of Claims 1 - 6, **characterised in that** the diameter of the hole (7b) of the slide (4) corresponds to the diameter of the hole (7) of the foot (1 a) of the generator/machine block (1), and the generator/machine block is placed on the slide (4) in such a way that the holes (7, 7b) are aligned with one another.

8. Bearing according to one of Claims 1 - 7, **characterised in that** the maximum movement distance (a) is 10 - 20 mm.

9. Bearing according to one of Claims 1 - 8, **characterised in that** it has a transverse sliding collar (6), which is inserted with an accurate fit into the hole (7b) of the slide (4) and projects beyond the upper slide surface and thus fits exactly into the over-lying hole (7) of the foot (1 a) of the generator/machine block (1) and can thus fix the latter.

10. Bearing according to one of Claims 1 - 8, **characterised in that** it has a transverse sliding collar (6), which can be inserted with an accurate fit into the hole (7) of the foot (1 a) of the generator/machine block and projects beyond the lower surface of the foot and thus fits exactly into the underlying hole (7b) of the slide (4) and can thus fix the generator/machine block.

11. Bearing according to one of Claims 1 - 10, **characterised in that** the screw connection device (19) is a spindle screw (5, 15) which ends in a threaded support ring (10), which is screwed into and out of the threaded part (20) for horizontal adjustment.

12. Bearing according to one of Claims 1 - 11, **characterised in that** the threaded part (20) is an integral constituent of the bearing foot (3).

13. Bearing according to one of Claims 1 - 11, **characterised in that** the threaded part (20) is a component which is separated from the bearing foot (3).

14. Bearing according to Claim 13, **characterised in that** the threaded part (20) is connected to the vertical adjustment screw (12) and moves vertically with the latter.

15. Bearing according to one of Claims 1 - 14, **characterised in that** it is an elastomer bearing.

16. Use of a bearing according to Claims 1 - 15 for generators in wind turbines.

## Revendications

1. Support de machine ou génératrice comprenant
(a) un pied de support (3), auquel un bloc de génératrice/machine peut être connecté au moyen d'une vis de fixation (9), laquelle peut être passée au travers d'un trou (7) dans le pied (1a) du bloc de transmission/machine (1) et est fixée et mise sous tension par un filetage (8) dans ou sur le pied de support (3), et
(b) un moyen de réglage horizontal et vertical,
**caractérisé en ce que**
(i) pour le réglage vertical du bloc de génératrice/machine, le pied de support (3) comprend une vis de réglage (12), qui peut être vissée verticalement vers le haut et vers le bas au moyen d'une partie de filetage (13) qui est connectée au pied de support (3), dans lequel la vis de réglage (12) comprend une ouverture carrée ou polygonale agencée centralement (11) ayant un diamètre qui est supérieur à celui de la vis de fixation (9) pour permettre l'adaptation d'une clé Allen correspondante (14), au moyen de laquelle ladite vis de réglage vertical (12) peut être actionnée en vissage et dévissage depuis le dessus au travers du trou (7) tandis que la vis de fixation (9) est préalablement enlevée, provoquant ainsi un abaissement ou relèvement spécifique du bloc de génératrice/machine qui est sous charge, et
(ii) pour le réglage horizontal du bloc de génératrice/machine, le pied de support (3) comprend un coulisseau déplaçable (4), qui est muni d'un trou (7b) et qui peut être fixé entre le pied de support (3) et le pied (1 a) du bloc de génératrice/machine (1) et qui peut être déplacée horizontalement perpendiculairement à l'axe de l'unité (1), dans lequel la capacité de déplacement horizontal du coulisseau (4) et de l'unité (1) fixée dessus est obtenue par l'intermédiaire d'un dispositif de connexion par vis (19) qui est attaché au coulisseau de telle sorte qu'il soir vissé vers le haut ou vers le bas au moyen d'une partie filetée (20) qui est connectée au pied de support (3) et qui supporte et guide le coulisseau de telle sorte qu'il puisse être déplacé latéralement vers et depuis d'une manière spécifique au moyen dudit dispositif de connexion par vis (19),
dans lequel le diamètre du trou (7) est supérieur au diamètre de la vis de fixation (9), et la différence de ces diamètres représente la distance de déplacement horizontal maximale (a) selon laquelle le coulisseau déplaçable (4) et par conséquent le bloc de génératrice/machine (1) peuvent être déplacés latéralement suivant une certaine direction.

2. Support selon la revendication 1, **caractérisé en ce que** la partie filetée (13) est un écrou de support, qui est attaché à ou dans un trou agencé centralement (7a) dans le pied de support.

3. Support selon la revendication 1, **caractérisé en ce que** la partie filetée (13) correspond à un filetage qui a été taillé sur ou dans un trou agencé centralement (7a) du pied de support.

4. Support selon l'une des revendications 1 - 3, **caractérisé en ce que** le filetage (8) à l'aide duquel la vis de fixation (9) est mise sous tension est un écrou de fixation qui est fixé su ou dans un trou agencé centralement du pied de support.

5. Support selon la revendication 1, **caractérisé en ce que** le pied de support (3) comprend un trou central (7a).

6. Support selon l'une des revendications 1 - 5, **caractérisé en ce que** la vis de réglage vertical (12) comprend une ouverture hexagonale pour permettre d'adaptation d'une clé Allen correspondante (14).

7. Support selon l'une des revendications 1 - 6, **caractérisé en ce que** le diamètre du trou (7b) du coulisseau (4) correspond au diamètre du trou (7) du pied (1 a) du bloc de génératrice/machine (1), et le bloc de génératrice/machine est placé sur le coulisseau (4) de telle sorte que les trous (7, 7b) soient alignés l'un avec l'autre.

8. Support selon l'une des revendications 1 - 7, **caractérisé en ce que** la distance de déplacement maximale (a) est de 10 - 20 mm.

9. Support selon l'une des revendications 1 - 8, **caractérisé en ce qu'**il comprend un collier de coulissement transversal (6), qui est inséré avec un ajustement précis dans le trou (7b) du coulisseau (4) et qui se projette au-delà de la surface de coulisseau supérieure et par conséquent s'adapte exactement dans le trou recouvrant (7) du pied (1 a) du bloc de génératrice/machine (1) et peut par conséquent fixer ce dernier.

10. Support selon l'une des revendications 1 - 8, **caractérisé en ce qu'**il comprend un collier de coulissement transversal (6), qui peut être inséré avec un ajustement précis dans le trou (7) du pied (1a) du bloc de génératrice/machine et se projette au-delà de la surface inférieure du pied et par conséquent s'adapte exactement dans le trou s'étendant dessous (7b) du coulisseau (4) et peut par conséquent fixer le bloc de génératrice/machine.

11. Support selon l'une des revendications 1 - 10, **caractérisé en ce que** le dispositif de connexion par vis (19) est une vis d'arbre (5, 15) qui se termine en une bague de support filetée (10), laquelle est vissée dans et hors de la partie filetée (20) pour permettre le réglage horizontal.

12. Support selon l'une des revendications 1 - 11, **caractérisé en ce que** la partie filetée (20) est une partie constitutive intégrale du pied de support (3).

13. Support selon l'une des revendications 1 - 11, **caractérisé en ce que** la partie filetée (20) est un composant qui est séparé du pied de support (3).

14. Support selon la revendication 13, **caractérisé en ce que** la partie filetée (20) est connectée à la vis de réglage vertical (12) et se déplace verticalement avec cette dernière.

15. Support selon l'une des revendications 1 - 14, **caractérisé en ce qu'**il est un support en élastomère.

16. Utilisation d'un support selon les revendications 1 - 15 pour des génératrices dans des éoliennes.
